# EUROPEAN PATENT APPLICATION

(11) **EP 3 401 347 A1**
(43) Date of publication of application: **14.11.2018**
(21) Application number: 16861083.0
(22) Date of filing: 17.10.2016
(51) Int. Cl.: C08G 61/12, G02F 1/15

(54) **ELECTROCHROMIC POLYMER AND PREPARATION METHOD THEREFOR AND COMPONENT CONTAINING SAME**

(30) Priority: 04.01.2016 CN 201610006046
(71) Applicant: BOE Technology Group Co., Ltd., Beijing 100015 (CN); University of Science and Technology of China, Hefei Anhui 230026 (CN)
(72) Inventor: XU, Chunye, Beijing 100176 (CN); MI, Sai, Beijing 100176 (CN); WU, Xingming, Beijing 100176 (CN); GU, Xin, Beijing 100176 (CN); CHEN, Juan, Beijing 100176 (CN); YAO, Jikai, Beijing 100176 (CN)
(74) Representative: Cohausz & Florack
(86) International application number: PCT/CN2016/102258
(87) International publication number: WO 2017/118139

(57) **Abstract**

An electrochromic polymer having formula (1), a method for fabricating the same, and a component comprising the same are disclosed. A device fabricated from the electrochromic polymer is capable of varying between purple and transparent and has advantages of easy fabrication, wide viewing angle, rich colors, high contrast, low driving voltage, and reduced response time. The device can realize storage without power consumption, and can be applied to the field of electrochromic display device.

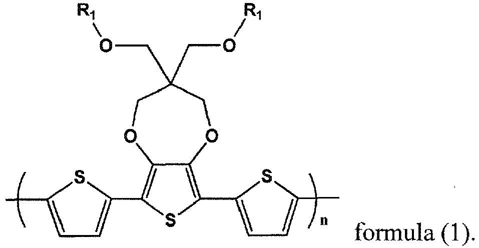

## Description

### TECHNICAL FIELD

The present disclosure belongs to the field of electrochromic material, and relates to a novel electrochromic polymer, a method for fabricating the same, and a component comprising the same.

### BACKGROUND

Under the action of an external electric field, an electrochromic material is subject to reversible oxidation and reduction reactions, so as to exhibit a reversible change in color and transparency.

A device made from the electrochromic material is referred to as an electrochromic device. In the electrochromic device, a conductive substrate coated with an electrochromic material acts as a working electrode, and a conductive substrate coated with an ion storage layer acts as a counter electrode. The working electrode and the counter electrode form a "sandwich" structure by an electrolyte assembling process. In a conventional process, the electrochromic working electrode and the ion storage layer counter electrode are formed by electrochemical deposition process. However, in the electrochemical method, an electrode with a large surface area can hardly be formed, the utilization ratio of material is low, and the stability of process is low. In addition, inorganic and organic small molecules have shortcomings in term of coloring efficiency, electrochromic response, and cycling life.

There is a demand in the art for a novel electrochromic material, which is soluble in a solvent, can be used for fabricating relevant components by a coating method, and has an improved electrochromic response.

### SUMMARY

Embodiments of the present disclosure intend to provide a novel electrochromic material, to overcome the shortcomings of the electrochromic material in the prior art in term of coloring efficiency and electrochromic response or other shortcomings.

According to a first aspect of the present disclosure, it is provided an electrochromic polymer having formula (1), 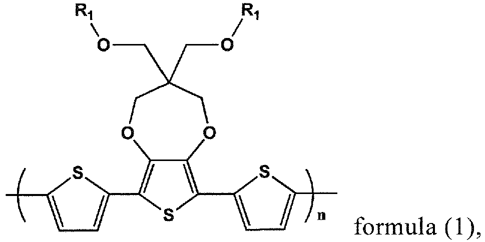 wherein R₁ is a linear chain or side chain alkyl containing 1-20 carbon atoms, and n is an integer between 10 and 100.

According to a second aspect of the present disclosure, it is provided a method for fabricating the above electrochromic polymer having formula (1), comprising steps of:
i) making a compound having formula (2) react with a compound having formula (3) to obtain a compound having formula (4), 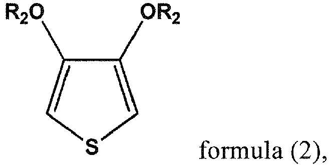 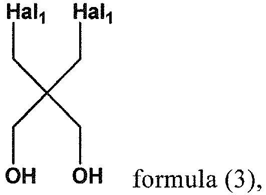 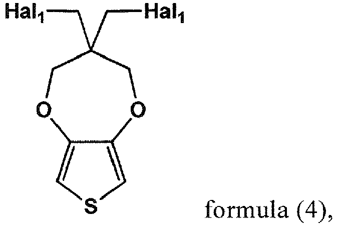 wherein R₂ is a linear chain or side chain alkyl containing 1-20 carbon atoms, and Hal₁ is a halogen;
ii) making the compound having formula (4) react with a compound having formula R₁-OH to obtain a compound having formula (5), 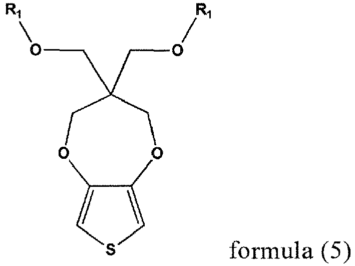
iii) making the compound having formula (5) react with an alkyl tin halide to obtain a compound having formula (6), wherein in the alkyl tin halide, halogen is Cl or Br, and alkyl is a linear chain or side chain alkyl containing 1-10 carbon atoms, 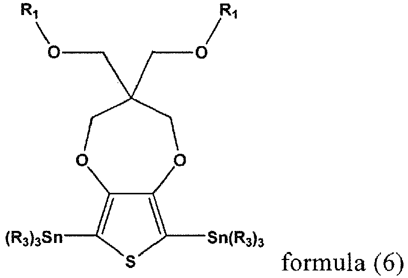 wherein R₁ is defined as above, R₃ is same as the alkyl in the alkyl tin halide;
iv) making the compound having formula (6) react with a compound having formula (7) to obtain the polymer having formula (1), 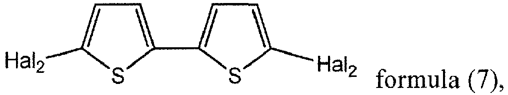 wherein Hal₂ is a halogen.

According to a third aspect of the present disclosure, it is provided a component comprising the electrochromic polymer having formula (1).

### BRIEF DESCRIPTION OF THE DRAWINGS

Fig. 1 illustrates a ¹H nuclear magnetic resonance (NMR) spectrum for an electrochromic polymer fabricated of embodiment 1.
Fig. 2 illustrates a cyclic voltammetry plot for a polymer film of embodiment 2, where the vertical coordinate represents magnitude of current, and the horizontal coordinate represents the applied voltage.
Fig. 3 illustrates transmittance of the polymer film of embodiment 2 in a colored state and a de-colored state, where the vertical coordinate represents transmittance, the horizontal coordinate represents wavelength. The dotted line represents transmittance of the polymer film in the de-colored state, and the solid line represents its transmittance in the colored state.
Fig. 4 illustrates difference in transmittance of the polymer film of embodiment 2 in the colored state and de-colored state, where the vertical coordinate represents transmittance, the horizontal coordinate represents wavelength, and this plot is obtained by subtracting the transmittance in the colored state from the transmittance in the de-colored state.
Fig. 5 illustrates a multi-potential step - transmittance plot, where the vertical coordinate represents transmittance, and horizontal coordinate represents time.
Fig. 6 illustrates a structural view for an electrochromic display device of embodiment 3.
Fig. 7 illustrates a process flow of fabricating the electrochromic display device of Fig. 6.
Fig. 8 illustrates transmittance for the electrochromic display device of embodiment 3 in the colored state and de-colored state. The dotted line represents transmittance of the electrochromic device in the de-colored state, and the solid line represents its transmittance in the colored state.

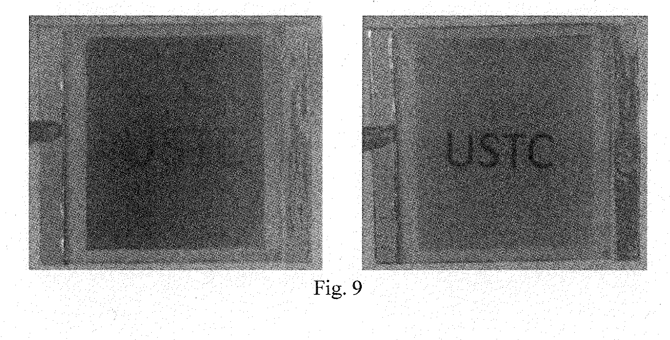

Fig. 9 illustrates an effect of the electrochromic display device of embodiment 3.

### DETAILED DESCRIPTION OF EMBODIMENTS

Reference numerals: 1 black matrix; 2 common electrode; 3 ion storage layer; 4 electrolyte; 5 spacer; 6 pixel retaining wall; 7 electrochromic layer; 8 pixel electrode.

The present disclosure provides the following implementation.
Implementation 1. An electrochromic polymer has formula (1), 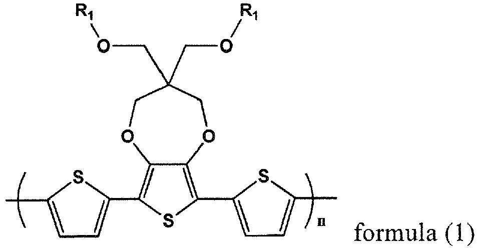 wherein R₁ is a linear chain or side chain alkyl containing 1-20 carbon atoms, and n is an integer between 10 and 100.
Implementation 2. The electrochromic polymer of implementation 1, wherein R₁ is a linear chain or side chain alkyl containing 4-15 carbon atoms.
Implementation 3. The electrochromic polymer of implementation 1, wherein R₁ is a linear chain or side chain alkyl containing 4-10 carbon atoms.
Implementation 4. The electrochromic polymer of any one of implementations 1-3, wherein n is an integer between 20 and 80.
Implementation 5. The electrochromic polymer of implementation 1, wherein R₁ is a linear chain or side chain alkyl containing 6-10 carbon atoms, and n is an integer between 20 and 70.
Implementation 6. The electrochromic polymer of implementation 1, wherein R₁ is 2-ethylhexyl, and n is an integer between 40 and 70.
Implementation 7. A method for fabricating the electrochromic polymer having formula (1) of any one of implementations 1-6, comprising steps of:
   i) making a compound having formula (2) react with a compound having formula (3) to obtain a compound having formula (4), 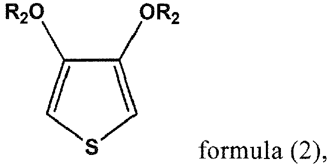 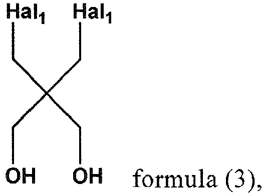 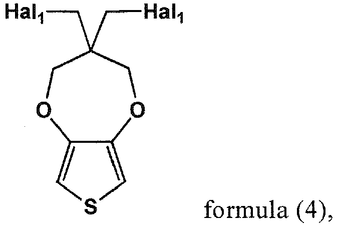 wherein R₂ is a linear chain or side chain alkyl containing 1-20 carbon atoms, and Hal₁ is a halogen;
   ii) making the compound having formula (4) react with a compound having formula R₁-OH to obtain a compound having formula (5), 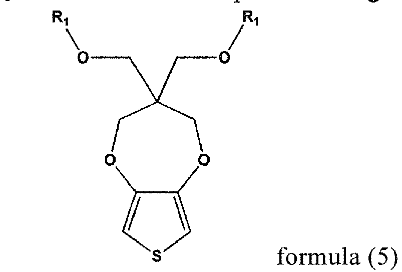
   iii) making the compound having formula (5) react with an alkyl tin halide to obtain a compound having formula (6), wherein in the alkyl tin halide, halogen is Cl or Br, and alkyl is a linear chain or side chain alkyl containing 1-10 carbon atoms, 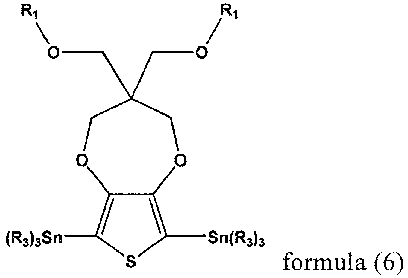 wherein R₃ is same as the alkyl in the alkyl tin halide;
   iv) making the compound having formula (6) react with a compound having formula (7) to obtain the polymer having formula (1), 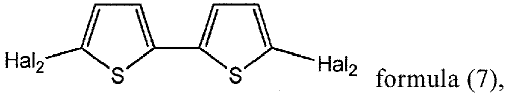 wherein Hal₂ is a halogen.
Implementation 8. The method of implementation 7, wherein R₂ is a linear chain or side chain alkyl containing 1-10 carbon atoms.
Implementation 9. The method of implementation 7, wherein R₂ is a linear chain or side chain alkyl containing 1-8 carbon atoms.
Implementation 10. The method of implementation 7, wherein R₂ is a linear chain or side chain alkyl containing 1-6 carbon atoms.
Implementation 11. The method of implementation 7, wherein R₂ is a linear chain or side chain alkyl containing 1-4 carbon atoms.
Implementation 12. The method of any one of implementations 7-11, wherein Hal₁ and Hal₂ are selected independently from Cl and Br.
Implementation 13. The method of any one of implementations 7-12, wherein the alkyl in the alkyl tin halide is a linear chain or side chain alkyl containing 1-6 carbon atoms.
Implementation 14. The method of any one of implementations 7-12, wherein the alkyl in the alkyl tin halide is a linear chain or side chain alkyl containing 1-4 carbon atoms.
Implementation 15. The method of any one of implementations 7-12, wherein reaction in step i) is performed in a solvent selected from a group of methylbenzene and dimethylbenzene at temperature of about 100 - 140 °C for a duration of about 5 - 24 hours, and p-toluenesulfonic acid is used as a catalyst.
Implementation 16. The method of implementation 15, wherein reaction in step i) is performed at temperature of 120 °C for a duration of 12 hours.
Implementation 17. The method of any one of implementations 7-16, wherein reaction in step ii) is performed in a solvent selected from the group of N,N-dimethylformamide and N,N-dimethylacetamide, at temperature of about 80∼120 °C for a duration of about 12∼48 hours.
Implementation 18. The method of implementation 17, wherein reaction in step ii) is performed at temperature of 95 °C for a duration of 24 hours.
Implementation 19. The method of any one of implementations 7-18, wherein reaction in step iii) is performed in a solvent selected from a group of tetrahydrofuran and absolute ether at temperature of about -10∼5 °C for a duration of about 2-4 hours.
Implementation 20. The method of implementation 19, wherein reaction in step iii) is performed at temperature of 0 °C for a duration of 3 hours.
Implementation 21. The method of any one of implementations 7-18, wherein reaction in step iv) is performed in a solvent selected from a group of methylbenzene and dimethylbenzene at temperature of about 100∼130 °C for a duration of about 36∼72 hours, a catalyst selected from a group of palladium acetate, tris(dibenzylideneacetone) dipalladium, and bistriphenylphosphine palladium dichloride is used, and a ligand selected from a group of triphenylphosphine and tris(o-methylphenyl) phosphine is used.
Implementation 22. The method of implementation 21, wherein reaction in step iv) is performed at temperature of 128 °C for a duration of 72 hours.
Implementation 23. A component comprises the electrochromic polymer having formula (1) in any one of implementations 1-6.
Implementation 24. The component of implementation 23, wherein the component is a film or a display device.

During fabricating the electrochromic polymer of embodiments of the present disclosure, it is possible to adjust the value of n by adjusting the polymerization time and reaction temperature. For example, a longer polymerization time and a higher reaction temperature lead to a larger value of n. In contrast, a shorter polymerization time and a lower reaction temperature lead to a smaller value of n.

The component comprising the electrochromic polymer of embodiments of the present disclosure is an electrochromic film. The electrochromic film is formed by spin coating or spray coating, and features a low voltage, decreased response time, and high transmittance.

The display device is a device comprising the electrochromic film. The display device is formed by assembling a suitable ion storage layer and electrolyte.

Some of potential embodiments of the present disclosure will be elucidated hereinafter, only for purpose of providing basic understanding of the present disclosure, instead of identifying key or essential elements of the present disclosure or restricting the scope to be protected.

Embodiment 1 - synthesis of the electrochromic polymer of the present disclosure. 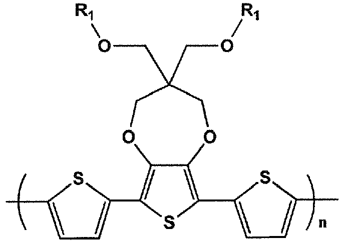 (wherein R₁ is 2-ethylhexyl, n is 40-70)

### A. synthesis of intermediate compound 1

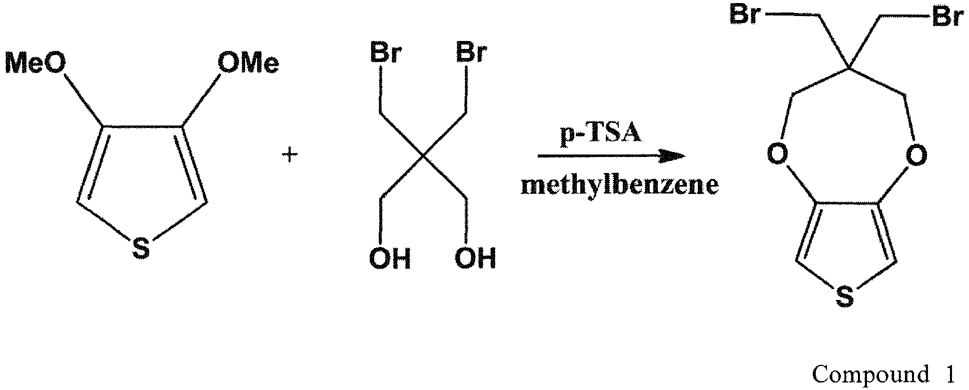

3,4-dimethoxy thiophene (10 g, 69 mmol), dibromo neopentyl glycol (36.3 g, 138 mmol), p-toluenesulfonic acid (p-TSA, 1.2 g, 7 mmol) and 250 mL methylbenzene are added to a 500 mL three-necked flask, and stirred and refluxed at 120 °C for 12 hours. The solvent in the mixture is removed by rotary evaporation at a reduced pressure. The mixture is subject to column chromatography to produce white solid, i.e., Compound 1 (with a yield of 73%).

### B. synthesis of intermediate compound 2

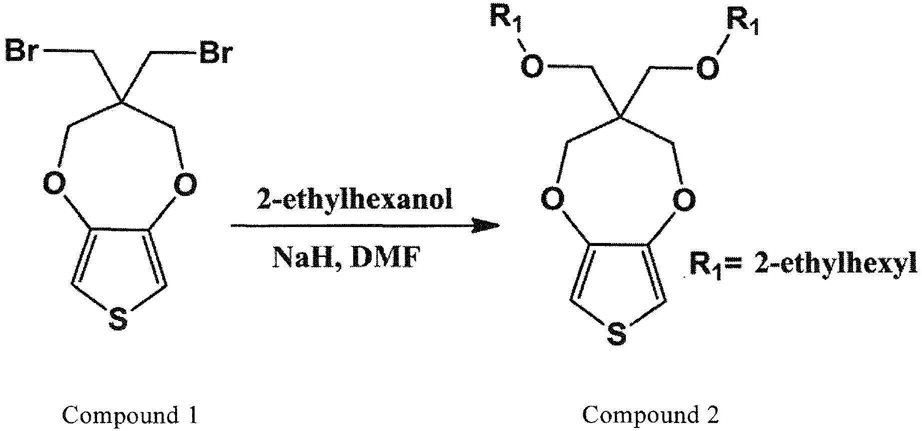

2-ethylhexanol (6.43 g, 49 mmol), sodium hydride (NaH, 3.95g, 99 mmol, protected by kerosene, with a content of 60%), and 100 mL N,N-dimethylformamide (DMF) are added to a 250 mL three-necked flask, and react in water and oxygen free conditions at 90 °C for 2 hours. Then, the mixture is added with compound 1 (4g, 12 mmol), and reacts at 95 °C for 24 hours. The mixture is then added with appropriate amount of salt water, and is extracted with diethyl ether to produce organic phase. The organic phase is dried with anhydrous magnesium sulfate, and is subject to column chromatography to produce a colorless oily liquid, i.e., compound 2(with a yield of 70%).

### C. synthesis of intermediate compound 3

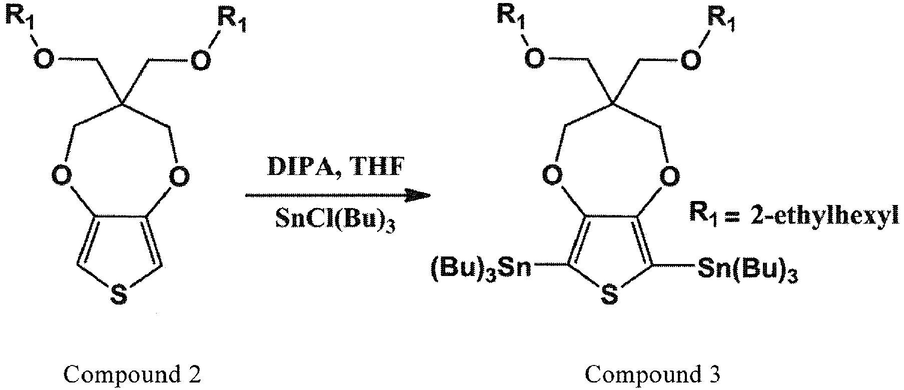

At -78 °C, diisopropylamine (DIPA, 2.06g, 20.4 mmol) is added to 50 mL tetrahydrofuran (THF). After the mixture is cooled to -78 °C, a solution of N-butyllithium in N-hexane (8.5mL, 20.4 mmol, with a concentration of 2.4mol/L) is dropped into the mixture. The mixture is stirred for 1 hour, is heated up to room temperature, and cooled again to 0 °C. The mixture is added with compound 2 (3 g, 6.81 mmol), is raised to room temperature and reacts overnight. The mixture is cooled to 0 °C, is added with tributyltin chloride (SnCl(Bu)₃, 6.64g, 20.4 mmol), and is stirred for 3 hours. The solvent is removed by rotary evaporation. The mixture is added with appropriate amount of deionized water, and is extracted with diethyl ether to produce organic phase. The organic phase is dried with anhydrous magnesium sulfate, and is subject to column chromatography to produce compound 3 (with a yield of 90%).

### D. synthesis of target electrochromic polymer

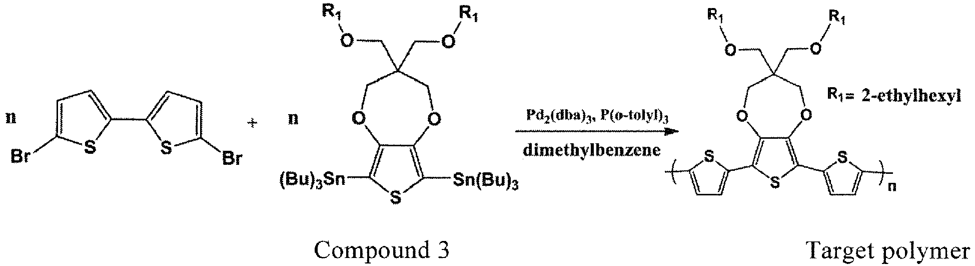

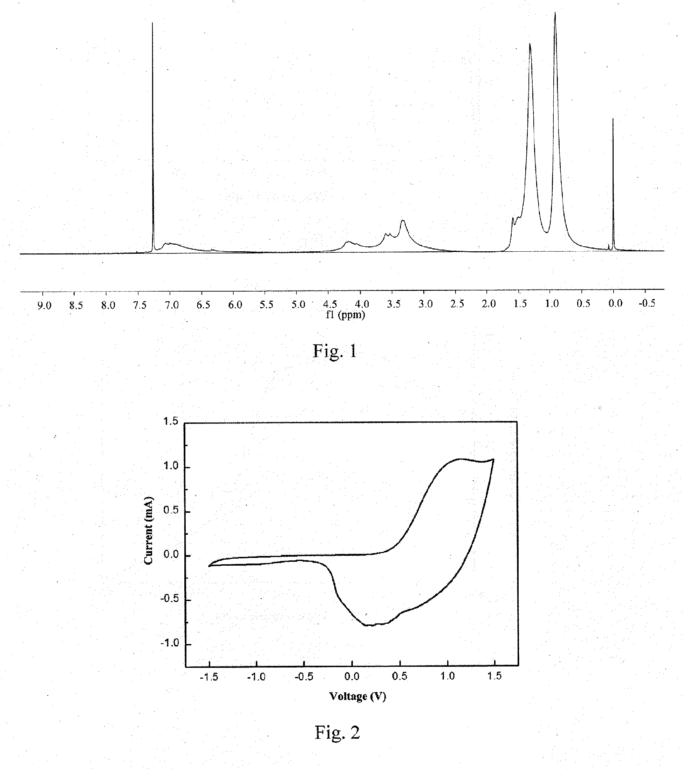

In the glove box, 5,5'-dibromo-2,2'-bithiophene (0.64g, 2 mmol), compound 3 (2 g, 2 mmol), tris(dibenzylideneacetone) dipalladium (Pd₂(dba)₃, 36 mg, 0.04 mmol), tris(o-methylphenyl) phosphine (P(o-tolyl)₃, 48 mg, 0.16 mmol), and 50 mL dimethylbenzene are added to a 150 mL long necked flask. Then the mixture is stirred and reacts at 128 °C for 72 hours. The resultant mixed solution is added to 800 mL methanol, and is filtered to produce precipitation, and the resultant precipitation is rinsed by using a soxhlet extractor and using methyl alcohol and n-hexane as an extractant, to produce a target electrochromic polymer (with a yield of 65%).The ¹H NMR spectrum of the target electrochromic polymer is shown in Fig. 1.

Tetrahydrofuran of a chromatographic grade is used as a mobile phase, and polystyrene is used as standard sample, and a gel chromatography is applied to measure a molecular weight of the polymer. By calculation, n is 42∼70.

Embodiment 2, fabrication of a film comprising the electrochromic polymer of the present disclosure

The polymer from embodiment 1 is dissolved in trichloromethane, to prepare a solution of 5 mg/mL. An art spray gun is used for spray coating this solution on a clean ITO glass, to produce an ITO working electrode which is coated with the polymer film with a thickness of 150 nm.

A 0.05M solution of lithium perchlorate in propylene glycol carbonate is prepared. Platinum wire is used as a counter electrode, silver wire is used as a reference electrode, and the ITO glass coated with the polymer film is used as a working electrode. A cyclic voltammetry plot of the resultant polymer film is obtained by a cyclic voltammetry method and shown in Fig. 2. As seen from Fig. 2, the polymer of the present disclosure has oxidation and reduction potentials at 1.0 V and 0.2 V, respectively.

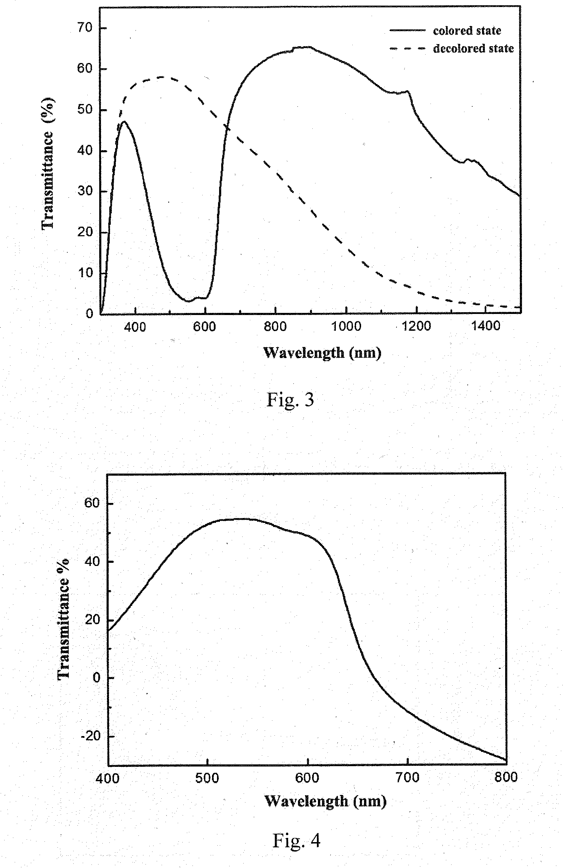

A 0.05M solution of lithium perchlorate in propylene carbonate is prepared. Platinum wire is used as a counter electrode, silver wire is used as a reference electrode, and the ITO glass coated with the polymer film is used as a working electrode. The film is drove by a cyclic voltammetry method to vary between a colored state and a de-colored state. Transmittance in the corresponding states is measured by an ultraviolet spectrophotometer and shown in Fig. 3. As seen from Fig. 3, the polymer film in the de-colored state has a transmittance of 58% at 486 nm, and the polymer film in the colored state has a transmittance of 3% at 553 nm. At a range about 540∼580 nm, a contrast (a ratio between transmittance in the de-colored state and colored state) is up to 10:1 or more.

Fig. 4 illustrates difference in transmittance of the polymer film of embodiment 2 in the colored state and the de-colored state. As seen from Fig. 4, the difference in transmittance is 54% at 534 nm.

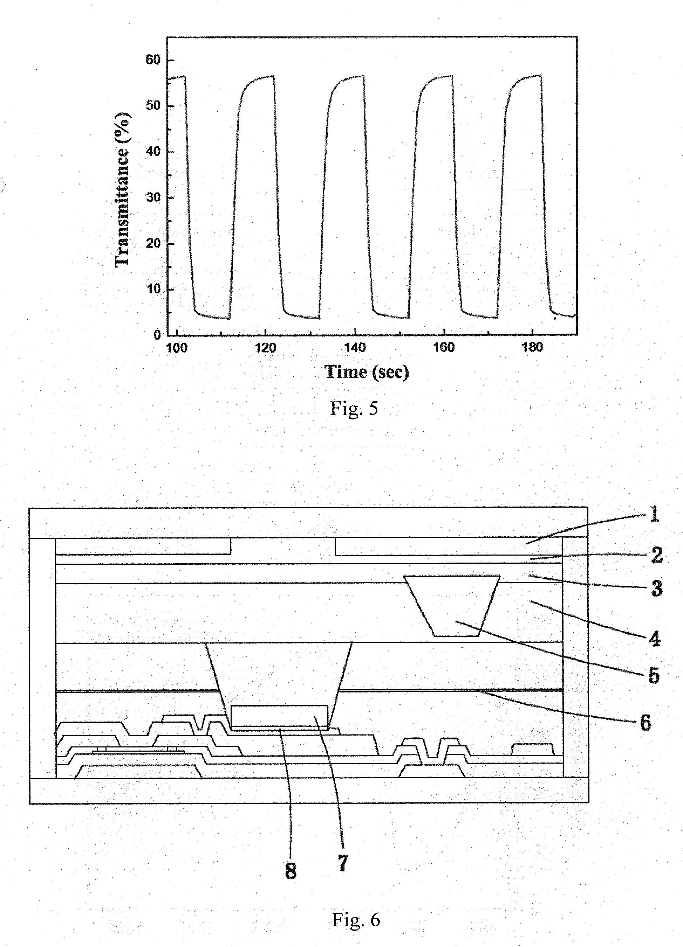

A 0.05M solution of lithium perchlorate in propylene carbonate is prepared. Platinum wire is used as a counter electrode, silver wire is used as a reference electrode, and an ITO glass coated with the polymer film is used as a working electrode. The film is drove by a multi-potential step method to vary between a colored state and a de-colored state. Transmittance in the corresponding states is measured by an ultraviolet spectrophotometer, and is shown as a multi-potential step - transmittance plot in Fig. 5. A response time is defined as 95% of the time for the transmittance to vary from the maximum to zero in respective state. The response time is 1.3 sec in the colored state and 3.0 sec in the de-colored state.

Embodiment 3, fabrication of an electrochromic display device comprising the electrochromic polymer of the present disclosure

### A. fabrication of the working electrode

0.05 g of the electrochromic polymer obtained from embodiment 1 is dissolved in 10 mL trichloromethane, and is subject to ultrasonic treatment for 20 min. By means of spray coating, the electrochromic polymer is coated onto a substrate of the working electrode, and forms a film on the substrate. An electrochromic working electrode is thus obtained.

### B. fabrication of an ion storage layer counter electrode

0.7 mL vanadium triisopropoxide is measured and added to 30 mL isopropyl alcohol, and is stirred for 5 min to produce a transparent and clear solution A. 0.3 mL titanium tetraisopropoxide is measured and added to 10 mL isopropyl alcohol, and is stirred for 5 min to produce a transparent and clear solution B. Solution A and solution B are mixed and then stirred for 10 min, thus producing a spin coating solution for the ion storage layer. The spin coating solution is coated onto a counter electrode substrate by a spin coater at 1000 rpm for 30 sec. The spin coating solution is then subject to a thermal treatment at 200 °C for 3 hours, thus producing the ion storage layer counter electrode.

### C. fabrication of electrolyte

0.532 g anhydrous lithium perchlorate is weighed and added to 50 mL propylene carbonate, and is stirred to dissolve, thus producing the electrolyte for the electrochromic device.

### D. fabrication of electrochromic display device

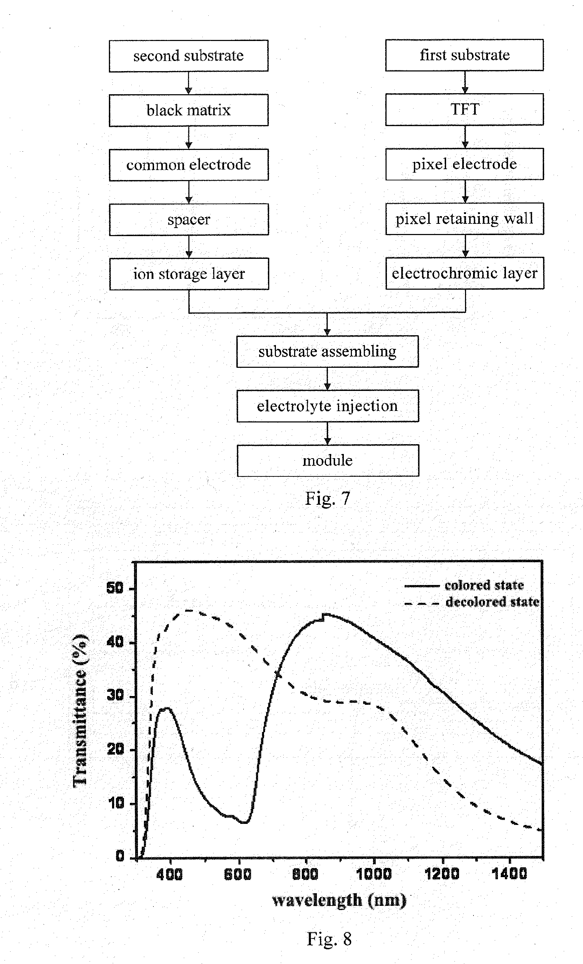

The working electrode, the ion storage layer counter electrode, and the electrolyte as fabricated above are used for fabricating the electrochromic display device. The structure is shown in Fig. 6. In Fig. 6, a black matrix 1 is arranged between a second substrate and a common electrode 2. Optionally, the black matrix 1 is also arranged between the common electrode 2 and an ion storage layer 3. The display device of Fig. 6 is fabricated in a process flow shown in Fig. 7.

In particular, TFTs are fabricated on a first substrate, and pixel electrodes 8 are formed by sputtering. A resin material for pixel retaining wall is coated onto the pixel electrode layer 8, and is subject to exposure, etching, and developing to form a pixel retaining wall 6. An electrochromic material is dropped into each pixel area within the pixel retaining wall, forming an electrochromic layer 7.

The black matrix 1, the common electrode 2, a spacer 5, the ion storage layer 3 are fabricated on a second substrate in this sequence. Then the ion storage layer is activated, and is ready for use.

The first substrate and the second substrate are assembled into a cell, and the electrolyte is injected into the cell by vacuum injection.

Finally, a module process is performed to complete the device.

The resultant electrochromic display device has an effect shown in Fig. 8. It indicates that the electrochromic device has a relatively large difference in transmittance.

Fig. 8 illustrates transmittance for the electrochromic device of embodiment 3 in the colored state and de-colored state. The device is drove by a cyclic voltammetry method to vary between a colored state and a de-colored state. Transmittance in the corresponding states is measured by an ultraviolet spectrophotometer. As seen from Fig. 8, the electrochromic device in the de-colored state has a transmittance of 46% at 461 nm, and the electrochromic device in the colored state has a transmittance of 6% near 615 nm.

In embodiments of the present disclosure, the electrochromic polymer is a soluble purple polythiophene electrochromic material, and varies its color between purple and transparent. The electrochromic polymer has rich and adjustable colors. The electrochromic polymer is dissolvable in a polar organic solvent, so that a solution can be formed for spray coating and spin coating, and this is applicable for fabricating a display device with a large area.

The electrochromic working electrode which is formed from the electrochromic polymer of embodiments of the present disclosure by spray coating and the ion storage layer counter electrode which is formed by spin coating are assembled appropriately, to produce a novel electrochromic device. The device is capable of varying between purple and transparent, and has advantages of easy fabrication, wide viewing angle, rich colors, high contrast, low driving voltage, and reduced response time. The device can realize storage without power consumption, and can be applied to the field of electrochromic display device.

Apparently, the person with ordinary skill in the art can make various modifications and variations to the present disclosure without departing from the spirit and the scope of the present disclosure. In this way, provided that these modifications and variations of the present disclosure belong to the scopes of the claims of the present disclosure and the equivalent technologies thereof, the present disclosure also intends to encompass these modifications and variations.

## Claims

1. An electrochromic polymer having formula (1), 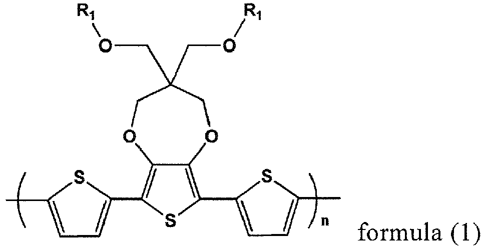 wherein R₁ is a linear chain or side chain alkyl containing 1-20 carbon atoms, and n is an integer between 10 and 100.

2. The electrochromic polymer of claim 1, wherein R₁ is a linear chain or side chain alkyl containing 4-15 carbon atoms.

3. The electrochromic polymer of claim 1, wherein R₁ is a linear chain or side chain alkyl containing 6-10 carbon atoms, and n is an integer between 20 and 70.

4. The electrochromic polymer of claim 1, wherein R₁ is 2-ethylhexyl, and n is an integer in between 40 and 70.

5. A method for fabricating the electrochromic polymer having formula (1) of any one of claims 1-4, comprising steps of:
i) making a compound having formula (2) react with a compound having formula (3) to obtain a compound having formula (4), 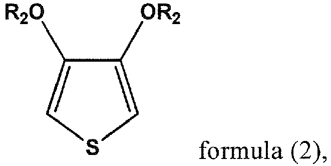 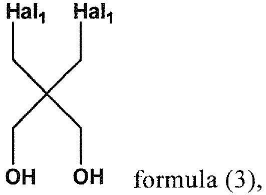 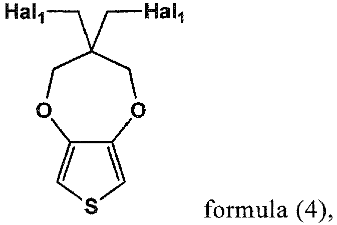 wherein R₂ is a linear chain or side chain alkyl containing 1-20 carbon atoms, and Hal₁ is a halogen;
ii) making the compound having formula (4) react with a compound having formula R₁-OH to obtain a compound having formula (5), 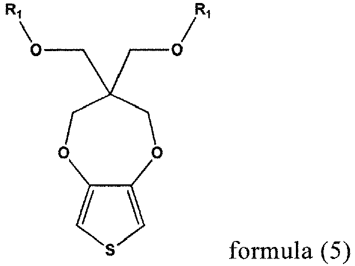
iii) making the compound having formula (5) react with an alkyl tin halide to obtain a compound having formula (6), wherein in the alkyl tin halide, halogen is Cl or Br, and alkyl is a linear chain or side chain alkyl containing 1-10 carbon atoms, 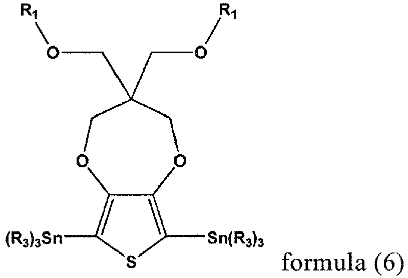 wherein R₃ is same as the alkyl in the alkyl tin halide;
iv) making the compound having formula (6) react with a compound having formula (7) to obtain the polymer having formula (1), 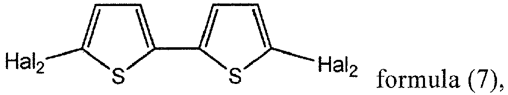 wherein Hal₂ is a halogen.

6. The method of claim 5, wherein R₂ is a linear chain or side chain alkyl containing 1-4 carbon atoms.

7. The method of claim 5, wherein Hal₁ and Hal₂ are selected independently from Cl and Br.

8. The method of claim 5, wherein the alkyl in the alkyl tin halide is a linear chain or side chain alkyl containing 1-4 carbon atoms.

9. The method of any one of claims 5-8, wherein in step i), the compound having formula (2) reacts with the compound having formula (3) in a solvent selected from a group of methylbenzene and dimethylbenzene at temperature of about 100 - 140 °C for a duration of about 5 - 24 hours, and p-toluenesulfonic acid is used as a catalyst.

10. The method of any one of claims 5-8, wherein in step ii), the compound having formula (4) reacts with the compound having formula R₁-OH in a solvent selected from a group of N,N-dimethylformamide and N,N-dimethylacetamide, at temperature of about 80-120 °C for a duration of about 12∼48 hours.

11. The method of any one of claims 5-8, wherein in step iii), the compound having formula (5) reacts with an alkyl tin halide in a solvent selected from a group of tetrahydrofuran and absolute ether at temperature of about -10∼5 °C for a duration of about 2-4 hours.

12. The method of any one of claims 5-8, wherein reaction in step iv) is performed in a solvent selected from a group of methylbenzene and dimethylbenzene at temperature of about 100∼130 °C for a duration of about 36∼72 hours, a catalyst selected from a group of palladium acetate, tris(dibenzylideneacetone) dipalladium, and bistriphenylphosphine palladium dichloride is used, a ligand selected from a group of triphenylphosphine and tris(o-methylphenyl) phosphine is used.

13. A component, comprising the electrochromic polymer having formula (1) of any one of claims 1-4.

14. The component of claim 13, wherein the component is a film or a display device.
